# EUROPÄISCHE PATENTSCHRIFT

(11) **EP 0 881 471 B1**
(45) Veröffentlichungstag und Bekanntmachung des Hinweises auf die Patenterteilung: **12.02.2003**
(21) Anmeldenummer: 98108669.7
(22) Anmeldetag: 13.05.1998
(51) Int. Cl.: G01D 5/347, G01B 7/00

(54) **Vorrichtung zur ortsfesten Befestigung eines Wegaufnehmers**
Device for fixedly mounting a displacement detector
Appareil pour le montage fixe d'un capteur de déplacement

(30) Priorität: 26.05.1997 DE 29709206 U
(43) Veröffentlichungstag der Anmeldung: 02.12.1998
(73) Patentinhaber: HORST SIEDLE GmbH & Co. KG., 78120 Furtwangen (DE)
(72) Erfinder: Masek, Ivan, 70619 Stuttgart (DE)
(74) Vertreter: Jakelski, Joachim, Dr.

(56) Entgegenhaltungen:
- EP-A- 0 385 418
- DE-A- 3 008 384
- DE-A- 3 838 662
- US-A- 4 991 311

## Beschreibung

Die Erfindung betrifft eine Vorrichtung zur ortsfesten Befestigung eines Wegaufnehmers.

Wegaufnehmer, insbesondere lineare Wegaufnehmer, beispielsweise potentiometrische, kapazitive oder induktive Wegaufnehmer werden in den unterschiedlichsten Bereichen der Technik eingesetzt. Beispielsweise kann durch sie die Stellung eines Kolbens, die Position eines translatorisch verschobenen Maschinenteils u.dgl. erfaßt werden.

Derartige lineare Wegaufnehmer werden an einem vorgegebenen Ort, beispielsweise an einer Maschinenfläche oder einem anderen Ort dadurch befestigt, daß zunächst das Befestigungsteil am Wegaufnehmer befestigt wird und sodann der Wegaufnehmer an der Maschinenfläche. Das Befestigungsteil weist dabei eine auf Ausnehmungen, Vorsprünge, Nuten u.dgl. an dem Wegaufnehmer angepaßte Form auf. Nachdem das Befestigungsteil an dem vorgegebenen Ort befestigt wurde, wird der Wegaufnehmer zunächst derart auf das Befestigungsteil von einer Seite her aufgeschoben, daß die an dem Befestigungsteil ausgebildeten Elemente in die auf sie angepaßten Ausnehmungen, Vorsprünge, Nuten u.dgl. des linearen Wegaufnehmers eingreifen.

Bei derartigen Vorrichtungen zur ortsfesten Befestigung eines wegaufnehmers (siehe z.B. DE 30 08 384 A) können insbesondere bei beengten Raumverhältnissen Probleme bei der Montage auftreten. So können am Wegaufnehmer vormontierte Befestigungselemente verrutschen oder gar verloren gehen. Bei Über-Kopf-Montage sind bei längeren Wegaufnehmern - es treten Längen bis zu ca. 4 m auf - dann durchaus zwei oder mehr Personen für die Montage notwendig.

Der Erfindung liegt daher die Aufgabe zugrunde, eine Vorrichtung zur ortsfesten Befestigung eines Wegaufnehmers der gattungsgemäßen Art derart zu verbessern, daß diese bei einfacher Herstellung eine schnelle und einfache Befestigung eines Wegaufnehmers, auch eines sehr langen linearen Wegaufnehmers bei kleinstem Montageraum ermöglicht.

Diese Aufgabe wird bei einer Vorrichtung zur ortsfesten Befestigung eines Wegaufnehmers der eingangs beschriebenen Art erfindungsgemäß dadurch gelöst, daß das Befestigungsteil ein elastisches Biegeteil ist, welches wenigstens zwei klammerförmige Elemente umfaßt, die in Rastaufnahmen des Wegaufnehmers einrastbar und durch Befestigungselemente, welche die klammerförmigen Elemente in den Aufnahmen festklemmen, an einem vorgegebenen Ort lösbar befestigbar sind.

Durch die Ausbildung des Befestigungsteils als elastisches Biegeteil, welches wenigstens zwei klammerförmige Elemente umfaßt, die in Rastaufnahmen des Wegaufnehmers einrastbar sind und durch Befestigungselemente, welche die klammerförmigen Elemente in den Rastaufnahmen festklemmen, an einem vorgegebenen Ort lösbar befestigbar ist, wird auf besonders vorteilhafte Weise eine sehr einfache Montage des Wegaufnehmers durch Einrasten der durch die Befestigungselemente "vorbefestigten" klammerförmigen Elemente in Rastaufnahmen des Wegaufnehmers und anschließendes Befestigen durch die Befestigungselemente ermöglicht.

Was die Ausbildung des Biegeteils betrifft, so sind rein prinzipiell die unterschiedlichsten Ausführungsformen denkbar. Eine vorteilhafte Ausführungsform sieht vor, daß das Biegeteil ein im wesentlichen rechteckförmiges Blechbiegeteil ist, bei welchem zwei sich gegenüberliegende Randbereiche derart abgewinkelt sind, daß sich im Profil im wesentlichen rechteckförmige klammerförmige Elemente ergeben, die im montierten Zustand seitlich über den Wegaufnehmer vorspringen und jeweils zu diesem hin gerichtete federnde Rascelemente aufweisen. Ein derartiges Blechbiegeteil ist nicht nur auf besonders einfache Weise herstellbar, es weist insbesondere auch eine genügend hohe Elastizität auf, die für das Einrasten des Wegaufnehmers erforderlich ist.

Hinsichtlich der Befestigungselemente sind ebenfalls die unterschiedlichsten Ausführungsformen denkbar. Eine vorteilhafte Ausführungsform sieht vor, daß die Befestigungselemente Schrauben sind, die die klammerförmigen Elemente im wesentlichen parallel zum befestigten Wegaufnehmer durchragen und deren Kopf im befestigten Zustand auf die federnden abgewinkelten Rastelemente zur Klemmbefestigung des Wegaufnehmers eine Spannkraft ausüben. Eine Befestigung des Blechbiegeteils über derartige Befestigungsschrauben ermöglicht nicht nur zum einen eine einfache Vorbefestigung der Blechbiegeteile bei nicht angezogenen Schrauben, sondern auch eine sehr schnelle abschließende Befestigung des in das Biegeteil eingerasteten Aufnehmers durch Anziehen der Schrauben simultan zur Befestigung des Biegeteils.

Vorzugsweise ist das Blechbiegeteil aus einem Stahlblech hergestellt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: ein Ausführungsbeispiel eines Befestigungsteils einer erfindungsgemäßen Vorrichtung zur ortsfesten Befestigung eines Wegaufnehmers;
- Fig. 2: eine Draufsicht auf ein klammerförmiges Element des in Fig. 1 dargestellten Befestigungselements;
- Fig. 3: eine Seitenansicht eines klammerförmigen Elements des in Fig. 1 dargestellten Befestigungselements;
- Fig. 4: eine Schnittansicht entlang der Linie IV-IV der Fig. 1 und
- Fig. 5: eine erfindungsgemäße Vorrichtung zum Befestigen von Wegaufnehmern im fertig montierten Zustand.

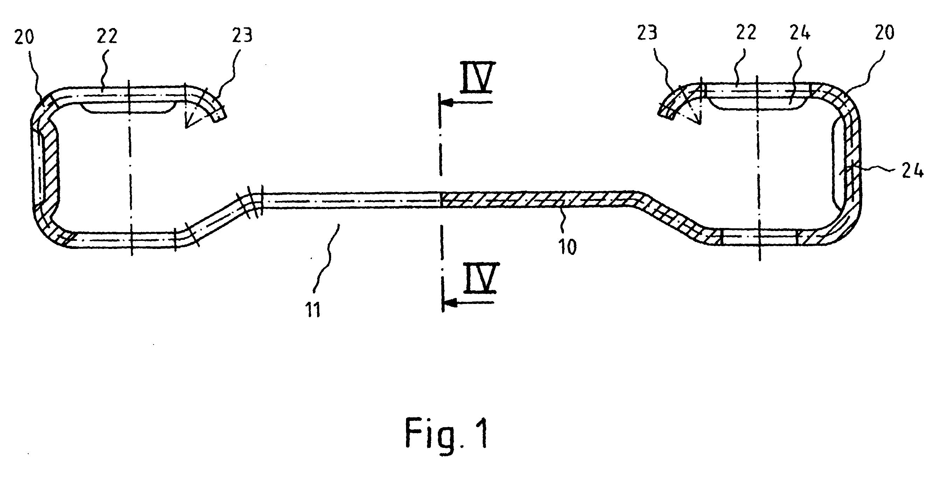

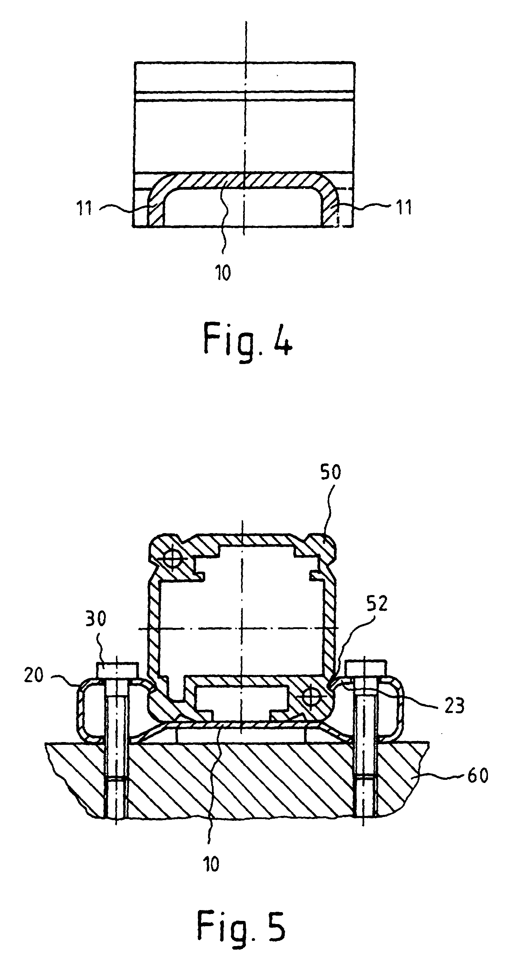

Ein Ausführungsbeispiel eines Befestigungsteils einer Vorrichtung zur ortsfesten Befestigung eines Wegaufnehmers, dargestellt in Fig. 1, 2, 3 und 4, umfaßt ein elastisches Blechbiegeteil 10, dessen sich gegenüberliegende Randbereiche derart abgewinkelt sind, daß sich im Profil im wesentlichen rechteckförmige klammerförmige Elemente 20 ergeben, die im montierten Zustand (vergl. Fig. 5) seitlich über einen zu befestigenden Wegaufnehmer 50 vorspringen und jeweils zu diesem hin gerichtete abgewinkelte federnde Rastelemente 23 aufweisen.

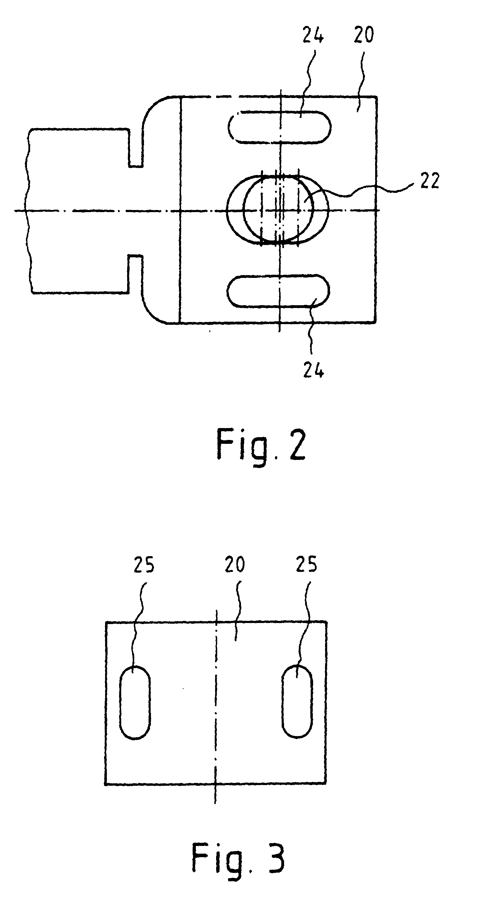

In den klammerförmigen Elementen 20 sind Öffnungen 22 zur Aufnahme von Schrauben 30 vorgesehen. Wie insbesondere aus Fig. 2 und Fig. 3 hervorgeht, sind in den klammerförmigen Elementen des weiteren Sicken 24, 25 zur Stabilisierung angeordnet.

Wie aus Fig. 1 und Fig. 4 hervorgeht, kann das Biegeteil 10 im wesentlichen mittig zwischen den beiden klammerförmigen Elementen 20 einen Sockel in Form von nach unten abgewinkelten Blechteilen 11 aufweisen, der an einer zu befestigenden Wand 60, beispielsweise einer Maschinenwand anliegt. Durch diesen Sockel wird eine Befestigung des Wegaufnehmers 50 in einem vorgegebenen Abstand von einer Befestigungsfläche 60 erreicht.

Die abgewinkelten federnden Vorsprünge 23 sind so ausgebildet, daß sie in Rastaufnahmen 52, die beispielsweise - wie in Fig. 5 dargestellt - als Ausnehmung in dem Träger des linearen Wegaufnehmers 50 angeordnet sind, eingreifen. Es versteht sich, daß die Rastaufnahmen auch Vorsprünge, Öffnungen o.dgl. sein können.

Im montierten Zustand rasten die abewinkelten federnden Rastelemente 23 des Biegeteils 10 in die Rastaufnahmen 52 ein und halten so den Wegaufnehmer 50 an einer vorgegebenen Position.

Die Montage des linearen Wegaufnehmers 50 geht nun folgendermaßen vonstatten.

Zunächst wird das Blechbiegeteil 10 an der zu montierenden Wand 60 befestigt, beispielsweise mittels der Schrauben 30, die jedoch nicht fest angezogen werden, so daß die elastische Federwirkung der abgewinkelten federnden Vorsprünge 23 der klammerförmigen Elemente 20 nicht beeinträchtigt wird.

Sodann wird der Wegaufnehmer 50 von oben in die klammerförmigen Elemente 20, d.h. in die abgewinkelten federnden Vorsprünge 23 eingerastet.

Zur genauen Positionierung des linearen Wegaufnehmers 50 kann dieser daraufhin in Axialrichtung, d.h. senkrecht zur Zeichenebene verschoben werden und auf diese Weise genau positioniert werden. Dabei wird durch die abgewinkelten federnden Vorsprünge 23 der klammerförmigen Elemente, die in die Rastaufnahmen 52 des Wegaufnehmers 50 eingreifen, verhindert, daß der Wegaufnehmer 50 von der Wand 60 wegfällt oder anderweitig entfernt werden kann. Erst nachdem der Wegaufnehmer 50 an einem gewünschten Ort positioniert ist, wird er durch Eindrehen der Schrauben 30 abschließend befestigt. Dabei drücken die Schraubenköpfe 31 auf die abgewinkelten federnden Teile 23 der klammerförmigen Elemente 20, wodurch eine Spannkraft von diesen auf den Wegaufnehmer 50 ausgeübt wird und der Wegaufnehmer 50 auf diese Weise durch eine Klemmbefestigung an dem vorgegebenen Ort gehalten wird.

Eine derartige Vorrichtung zur Befestigung des Wegaufnehmers 50 weist nicht nur wenig und leicht herstellbare Teile auf, nämlich das Blechbiegeteil 10 und die Schrauben 30, sie ermöglicht auch die Befestigung des Wegaufnehmers 50 bei kleinstem Montageraum.

Da der lineare Wegaufnehmer 50 darüber hinaus im nicht angezogenen Zustand der Schrauben 30 parallel zu seiner Axialrichtung verschoben werden kann, ist auf einfache Weise eine genaue Vor-Positionierung des linearen Wegaufnehmers 50 möglich.

Es versteht sich, daß neben der beschriebenen Befestigungsmethode auch eine Befestigung des Wegaufnehmers in der Weise erfolgen kann, daß die klammerförmigen Elemente 20 an dem Wegaufnehmer befestigt werden und erst dann der Wegaufnehmer zusammen mit der gesamten Vorrichtung zur Befestigung des Wegaufnehmers 50 an einer Montagefläche geschraubt wird. Bei der oben beschriebenen Art und Weise der Befestigung des Wegaufnehmers 50 ist aufgrund der auf allen Seiten des Wegaufnehmers 50 angeordneten Aufnahmen 52 eine Befestigung des Wegaufnehmers 50 derart möglich, daß seine Widerstandsschicht immer oben liegt, so daß Schleifer, Schleiferträgerkufen und dergleichen unterhalb der Widerstandsschicht liegen. Auf diese Weise kann bei Betätigung des Wegaufnehmers 50 entstehender Abrieb von der Widerstandsbahn abfallen und die Lebensdauer des Wegaufnehmers verkürzen.

## Patentansprüche

1. Vorrichtung zur ortsfesten Befestigung eines Wegaufnehmers (50) umfassend ein an einem vorgegebenen Ort befestigbares Befestigungsteil, an dem der Wegaufnehmer (50) befestigbar ist, **dadurch gekennzeichnet, daß** das Befestigungsteil ein elastisches Biegeteil (10) ist, welches wenigstens zwei klammerförmige Elemente (20) umfaßt, die in Rastaufnahmen (52) des Wegaufnehmers (50) einrastbar und durch Befestigungselemente, welche die klammerförmigen Elemente (20) in den Rastaufnahmen (52) festklemmen, an einem vorgegebenen Ort lösbar befestigbar sind.

2. Vorrichtung nach Anspruch 1, **dadurch gekennzeichnet, daß** das Biegeteil (10) ein im wesentlichen rechteckförmiges Blechbiegeteil ist, bei welchem zwei sich gegenüberliegende Randbereiche derart abgewinkelt sind, daß sich im Profil im wesentlichen rechteckförmige klammerförmige Elemente (20) ergeben, die im montierten Zustand seitlich über den Wegaufnehmer (50) vorspringen und jeweils zu diesem hin gerichtete abgwinkelte federnde Rastelemente (23) aufweisen.

3. Vorrichtung nach Anspruch 1 oder 2, **dadurch gekennzeichnet, daß** die Befestigungselemente Schrauben (30) sind, die die klammerförmigen Elemente (20) im wesentlichen parallel zum zu befestigenden Wegaufnehmer (50) durchragen und deren Köpfe (32) im befestigten Zustand auf die abgewinkelten federnden Rastelemente (23) der klammerförmigen Elemente (20) zur Klemmbefestigung des Wegaufnehmers (50) eine Spannkraft ausüben.

4. Vorrichtung nach einem der Ansprüche 1 bis 3, **dadurch gekennzeichnet, daß** das Biegeteil (10) aus Stahlblech besteht.

## Claims

1. A device for fixedly mounting a displacement sensor (50), the device comprising a mounting part, mountable at a given site, on which the displacement sensor (50) can be mounted, **characterised in that** the mounting part is a resilient bent part (10) comprising at least two clip-shaped members (20) which can engage locking receivers (52) of the displacement sensor (50) and which can be detachably mounted at a given site by mounting members which firmly clamp the clip-shaped members (20) in the locking receivers (52).

2. A device according to Claim 1, **characterised in that** the bent part (10) is a substantially rectangular sheet-metal bent part, wherein two mutually facing edge regions are bent such that clip-shaped members (20) of substantially rectangular profile are produced, in the mounted state these members (20) projecting laterally beyond the displacement sensor (50) and each having bent resilient locking members (23) directed towards the displacement sensor (50).

3. A device according to Claim 1 or 2, **characterised in that** the mounting members are screws (30) which pass through the clip-shaped members (20) in a manner substantially parallel to the displacement sensor (50) to be mounted and whose heads (32) in the mounted state exert a clamping force upon the bent resilient locking members (23) of the clip-shaped members (20) in order to mount the displacement sensor (50) by means of clamping.

4. A device according to any one of Claims 1 to 3, **characterised in that** the bent part (10) is made of sheet steel.

## Revendications

1. Dispositif pour le montage fixe d'un capteur de déplacement (50) comprenant une pièce de fixation destinée à être fixée à un emplacement prédéterminé, et sur laquelle on fixe le capteur de déplacement (50),
**caractérisé en ce que**
la pièce de fixation est une pièce flexible (10) élastique, comportant au moins deux éléments (20) en forme de pince qui viennent s'accrocher dans des logements d'encliquetage (52) du capteur de déplacement (50) et fixés par des éléments de fixation qui fixent de manière amovible les éléments en forme de pince (20) dans les logements d'encliquetage (52) à un endroit prédéterminé.

2. Dispositif selon la revendication 1,
**caractérisé en ce que**
la pièce flexible (10) est une pièce en tôle flexible essentiellement rectangulaire avec deux zones de bord recourbées l'une vers l'autre donnant en section des éléments (20) en forme de pince essentiellement rectangulaires, qui à l'état monté viennent en saillie latéralement par rapport aux capteurs de déplacement (50) et comportent des éléments d'encliquetage (23), élastiques, repliés, dirigés vers le capteur.

3. Dispositif selon la revendication 1 ou 2,
**caractérisé en ce que**
les éléments de fixation sont des vis (30) qui traversent les éléments en forme de pince (20) essentiellement dans une direction parallèle aux capteurs de déplacement (50) à fixer et les têtes (32) des vis à l'état fixé exercent sur les éléments d'encliquetage (23) élastiques, repliés, des éléments en forme de pince (20), une force de serrage pour fixer par serrage le capteur de déplacement (50).

4. Dispositif selon l'une des revendications 1 à 3,
**caractérisé en ce que**
la pièce flexible (10) est en tôle d'acier.
